# EUROPEAN PATENT SPECIFICATION

(11) **EP 1 289 374 B1**
(45) Date of publication and mention of the grant of the patent: **25.07.2007**
(21) Application number: 01934308.6
(22) Date of filing: 29.05.2001
(51) Int. Cl.: A22C 17/10, A22C 18/00, A22B 7/00, B65B 65/08

(54) **AN INTEGRATED MEAT PROCESSING AND INFORMATION HANDLING METHOD**
VERFAHREN ZUR FLEISCH VERARBEITUNG UND ZUM BEARBEITEN VON INFORMATIONEN
PROCEDE INTEGRE DE TRAITEMENT DE VIANDE ET DE GESTION D'INFORMATIONS

(30) Priority: 30.05.2000 IS 551900
(43) Date of publication of application: 12.03.2003
(73) Proprietor: Marel HF., 112 Reykjavik (IS)
(72) Inventor: THORVALDSSON, Bjorn, IS-270 Mosfellsbaer (IS); KRISTINSSON, Kristinn, A., IS-110 Reykjavik (IS); GUDJONSSON, Petur, IS-108 Reykjavik (IS)
(74) Representative: Hardarson, Gunnar Örn
(86) International application number: PCT/IS2001/000011
(87) International publication number: WO 2001/091565

(56) References cited:
- EP-A1- 0 829 204
- WO-A1-94/22315
- WO-A1-98/36645
- DE-A1- 4 228 068
- DE-A1- 19 502 689
- US-A- 4 802 094

## Description

### Field of the Invention

The present invention relates to a process and an application for handling information in relation to meat being conveyed through a number of processing stations. The information is used to trace the processing history of a piece of meat, including its origination. The ability to trace the processing history may be used e.g. in order to trace back sources of contamination and for verification of the status and quality, weight etc. of the meat. The information is furthermore useful for the workers processing the meat at the stations or useful for the control and management of the meat processing plant.

### Description of the Prior Art

Applications comprising a conveyor system for meat in combination with electronic storage of information about the meat, such as information about the weight of the meat exist. Known systems typically comprise means for reading information from the provider of the meat, e.g. by use of a bar code reader and means for printing out the information e.g. for labelling packages with meat. The known systems are able to receive information related to a piece of meat and to pass the information along with the meat. However the known systems are adapted to convey the meat in batches so that the information about the meat is stored relative to a batch. As an example the meat from one animal or from a quarter of an animal is placed in one bin or hung on one hook. When the meat is cut into pieces these pieces are transported and stored together and in this way it is possible to trace the origination of the meat.

DE-A-195 02 689 discloses a system where the goods suspended from hooks are exposed to electronic cameras at each processing station, where digital images are obtained with characteristic features for identification. The initial characteristics are determined and stored in the form of a feature code. During subsequent operations the images produced by the cameras are analysed and compared with the stored code for recognition of the objects. The images are stored in a pixel matrix in the electronic image memory of a central computer.

The present invention relates to a process wherein the position and information is traced in relation to every single piece of meat. This process offers enhanced flexibility towards when and where to process the individual pieces of meat. Two pieces of meat originating e.g. from the same quarter or hindquarter etc. may thus be processed in different places or at different time.

Due to the tracing of information related to the individual pieces of meat it is possible to provide the workers with processing instructions or with support for where, when and how to process the meat.

Furthermore the present invention relates to system capable of tracing all information related to the meat and to relate the information to information about the control and management of the meat processing facility or plant. The tracing can be performed by relating the information about the meat to information related to the purchase of meat or to the payment of the workers and to store the information throughout the processing of the meat.

### General Description of the Invention

According to a first aspect the present invention relates to an integrated meat processing and information handling method using a tracing method adapted to trace a position of a piece of meat on a conveyor, said meat processing and information handling method comprising the steps of:
- storing in a computer system information related to a piece of meat,
- transferring the piece of meat between a number of processing stations while the position of the meat is traced by the computer system,
- for at least one processing station storing in the computer system further information related to the piece of meat or related to the processing of the piece of meat and
- providing at least one processing station with information from the computer system.

The position of an item such as a piece of meat on a conveyor belt can be traced e.g. by means of sensors arranged in a number of places along the conveyor belt. When a number of pieces of meat are placed sequentially, e.g. in the beginning of the conveyor belt. The position of each piece of meat can be determined by tracing the number of pieces passing the sensors placed along the conveyor belt and by relating this number to the sequence of which the meat were placed on the conveyor. The pieces of meat can also be traced by monitoring their displacement, e.g. by keeping track of index pulses in the conveyor system or simply by monitoring the order in which pieces of meat enter and leave a conveyor belt. Another way of tracing the position of the meat on the conveyor belt is to attach the meat to a bin with an identification tag or to attach an identification tag directly to the meat.

The information related to a piece of meat could be information related to the origination of the meat such as from which farm or from which animal that piece of meat originated. This is typically information that would be stored for a piece of meat as the meat enters the first processing station of a meat processing plant. Each time the meat is divided into smaller cuts from the meat, each cut may be associated with this information. Information related to the processing of the meat, such as related to a worker or a machine doing the processing or related to the quality of the processing, the weight of the meat, the time of the processing or the duration of the processing may be added to the information whenever such information is relevant to the meat or to the processing facility etc.

When the piece of meat is being conveyed between the processing stations the computer system must trace the position of that piece of meat so that the information related to the meat can be recalled and used e.g. for training purpose, for support of the processing worker or machine, for statistical purpose, for labelling the meat e.g. with weight and quality or origination information, for quality inspection of the meat etc. As an example a worker or a machine can recall the information related to a piece of meat and use the information to determine good ways of cutting the meat according to a pre-selected criterion. The criterion could be which cut is the fastest, which cut gives the highest profit, which cut is the presently most demanded cut by the customers, which cuts are optimal in relation to the quality of the specific piece of meat, which cuts fit given weight criteria etc.

According to a preferred embodiment the method further comprises the steps of
- cutting the piece of meat into at least two pieces of meat and
- storing in the computer system information related to the at least two pieces of meat.

The steps of cutting a piece of meat into a number of pieces of meat typically involve a problem with the tracing of the origination of the meat. One solution is to store all pieces of meat originating from one piece of meat in the same bin. Another solution is to store information related to a piece of meat, e.g. information related to the origination of a piece of meat and then trace the position of that piece of meat In this way one logistic problem is solved in relation to the order of the production. Instead of having to process all meat related to the same origination subsequently all cuts of a certain kind, no matter if they originate from different animals or even from different farms may be processed subsequently. In this way the workers may get used to do one specific cut which enables a higher degree of repetitive work and a higher degree of specialisation amongst the workers, or in case of automatic processing a higher degree of specialisation of the machines which could lead to higher efficiency.

The information related to the meat can be analysed and used for controlling a processing station. As an example the information can indicate that a piece of meat originates from a farm or from a country where a specific set of rules applies for the cutting of the meat. Such rules could be related to the cutting sequence and which part of the meat is to be used and which is to be destroyed. This could e.g. be due to "Mad Cow Disease" or salmonella. As another example the meat could be in a certain condition - too much fat, too high bone weight etc. - so that manual processing would be too expensive and therefore automatic processing of the meat e.g. for production of burger meat etc should be selected. It could also be that a piece of meat could be cut into a varying number of cuts, wherein the cuts that match the meat on stock and order situation should be selected.

Information related to a number of pieces of meat could also be analysed in order to provide information related to the origination of the pieces of meat, e.g. a number of pieces of meat having a certain characteristic. These might relate to a high fat percentage, certain bacteriological states or conditions etc. By means of the information symptoms and characteristics relating to a farm, a region or a country may be provided. E.g. if a certain disease is found in a number of pieces of meat it may be analysed if the pieces originates from one single animal or from one farm, a region or a country.

Another example is if a number of pieces of meat is infected by a disease and by analysing the information it has been found that the pieces originate from a number of animals. The information may then be analysed so as to find out if the disease may be related to processing by a specific processing station or a specific worker and it may be found that the disease has originated from an infected transportation bin, a worker etc.

It could also be the case that a number of pieces of meat are in a bad condition or even wasted due to wrong treatment of the meat. As an example the meat may have been stored in a warm processing room for too many hours, a bone has been crushed so that the meat is filled with bone fragments etc. By analysing the information from a number of wasted pieces of meat it may be found what happened to the meat and faults in the processing may be corrected.

According to another aspect of the invention the information may be used to trace the amount of resources spent on a piece of meat, e.g. how much automatic processing time and how much manual processing time. The information can be used to forecast a price and cost indication showing the profit or loss of the processing of a specific piece of meat. It may further be found that all meat originating from a specific farm takes longer time to process due to fat percentage or similar conditions or it may be found that one worker or one processing station has longer processing time than other. It may even be found that one worker is fast at processing one type of meat whereas the same worker is slow at processing another type of meat. By monitoring the information about the duration of processing for each worker, the performance of a worker may be compared to a reference value, such as the average processing time for a specific piece of meat or such as a performance related to a piece-contract for paying the worker. The worker can at the same time be provided with information related to this comparison, such as: "you are faster than average" or "you have earned 10% bonus today". Similarly the management for selection of workers for specific tasks may use the information.

Another aspect of the invention is related to a time stamp of the processing or of each of the processes included in the processing of the meat. Such a time stamp could ease the investigation if a piece of meat is found with a certain defect. The information may then be used to trace all meat processed at the same time of the same day, and/or at the same time at the same processing stations or by the same worker.

For processing stations operated by workers the information may be used for guiding the worker through his work. E.g. the worker may be provided with a graphical picture showing how to cut exactly the piece meat lying in front of him on the processing table. Such guidance can be used e.g. for training new employees or for obtaining a higher degree of flexibility in the working staff. One example is if the management decides that the workers should be shifted around between the individual processing stations so as to obtain knowledge about many processes. In this way one worker can easily take over another worker's place in case of absence. By means of the graphical presentation of instructions the worker can be working within a new area within a very short time.

According to a second aspect the present invention relates to a computer program product for a digital computer, said computer program product comprising software code for performing the before mentioned method.

According to a third aspect the present invention relates to an integrated meat processing and information handling system for processing a meat product, said system comprising: receiving area for receiving said meat products, means for obtaining information related to said meat product, a storage means for electronically storing said information a computing means for processing the stored information, means for utilizing the stored information for selecting at least one cutting rule for guiding in processing said meat product, at least one processing station for processing the meat product in terms of said at least one cutting rule, communication means for communicating to the processing stations and the computing means, and means for providing cutting rules to said processing station, a transporting means for transporting said meat product between at least one processing station, a tracing means for tracing a position of said meat product, means for processing the meat according to said cutting rules into smaller meat products, means for transferring said processed meat product while tracing their position to a packing area, wherein said processed meat product is packed at labelled with at least one of said information.

### Brief description of the drawings

A system based upon a preferred embodiment of the invention will now be described in detail with reference to the drawings in which:
Fig. 1 shows a meat processing plant,
Fig. 2 shows one processing station of the plant - a pre-saw station,
Fig. 3 shows two slicing stations and one de-boning station,
Fig. 4 shows a layout of a communication terminal, and
Fig. 5 shows two slicing stations, de-boning station and inspection station
Fig 6-9 shows various reports

### Description of a preferred embodiment

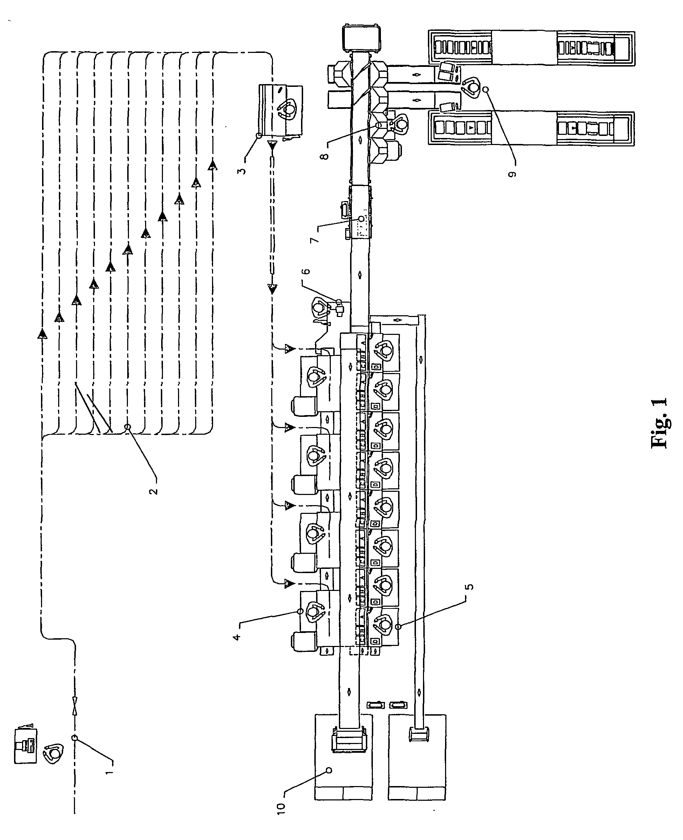

Fig. 1 shows a meat processing facility where the meat is received in form of whole animals or parts of animals such as quarters. The arrow shows the process way through the facility wherein the meat is being registered, cut into pieces, sorted e.g. relative to quality, weight or type of product and finally packed and labelled.

Typically the meat is sorted relative to the categories: fat, bone, trims and product where the product can be a T-bone, a sirloin etc. and/or the meat is sorted relative to categories such as pre-determined weight and/or quality such as fat percentage etc.

Referring to Fig. 1 a meat processing facility typically comprises a meat receiving area 1, a marshalling area 2, a pre-saw area 3, a boning area 4, a slicing area 5 where the de-boned meat is cut into pieces, an area for bone in loin 6 (bones with meat), a dynamic scale 7 for weighing the meat, static scale 8 for weighing the trim, a packing area 9 for packing and labelling vacuum packed cuts and a number of containers 10 for fat or bones etc.

A conveyor system moves the meat between each of the areas or between processing stations in each of the areas. Presently, the conveyors of meat processing facilities are typically adapted to convey the meat in batches such as in bins or on hooks. In order to enable that the origination of a piece of meat can be traced, e.g. in order to find out from which animal or from which farm the meat originated, meat from an animal or at least from a quarter of the animal is stored and transported in one batch.

This invention is not limited to conveyor systems transporting batches of meat. It is one aspect of the invention to trace the position and information related to every single piece of meat, thus the following description relates to a meat processing facility wherein the pieces of meat are transported individually. An information system traces all information about each piece of meat, e.g. after each processing station. In this way the meat from one animal may be processed in different areas of the processing facility or over a period of time, e.g. the hindquarter could be processed in one week or in one area and the forequarter may be processed in another week or area. The information is communicated to and from the system by means of terminals with screens, keyboards etc., barcode readers, vision or scanning sensors, scales, motor controllers of the conveyor etc.

The system is adapted to handle information such as:
ID-tag (identification numbers pointing to origination of the meat),
Weight and type of cut (sirloin etc.),
Weight and type of animal (beef, pork etc),
Slicer ID (worker no.),
De-boner ID (worker no.),
Date and time of processing (date and time the meat was processed),
Serial no (consecutive numbering of meat passing through), and
Time used to process a specific cut (number of minutes).

No matter if the meat is conveyed or if it is placed in a bin waiting to be processed etc. the system traces the position of the meat and the information related to the meat. The meat does not need to be conveyed in batches such as in bins or on hooks because the system keeps trace of the position and an information record for every single piece of meat.

The information related to the meat may be used not only for supporting the processing and conveying of the meat, as described above, but also for gathering useful information related to the control and management of the meat processing facility or plant. This could be information related to the purchase of meat or to the payment of the workers.

One example is to trace the time used to process a specific cut over time and to compare the information with information on the processing time of the individual workers so as to determine the capability of the workers, or to compare the information with information about the weight and/or quality of the cuts or information about the quality of the meat. An interesting aspect is to find out if a certain farm always delivers meat that takes longer time to process or if a certain worker always has higher processing time - and maybe also higher processing quality.

In the following an example of meat processing according to the invention is described.

Products arriving have an ID-tag, e.g. in form of barcodes. The ID- tag contains e.g. a serial number or similar identification. The information from the ID-tag may be downloaded into a RF-tag (Radio Frequency tag) or similar device for automatically reading and writing information or it may simply be used as it is. No matter if the information is downloaded into an RF-tag, if it is a barcode or any other means of tag, the tag may identify the meat throughout the processing by means of RF-readers, barcode readers etc.

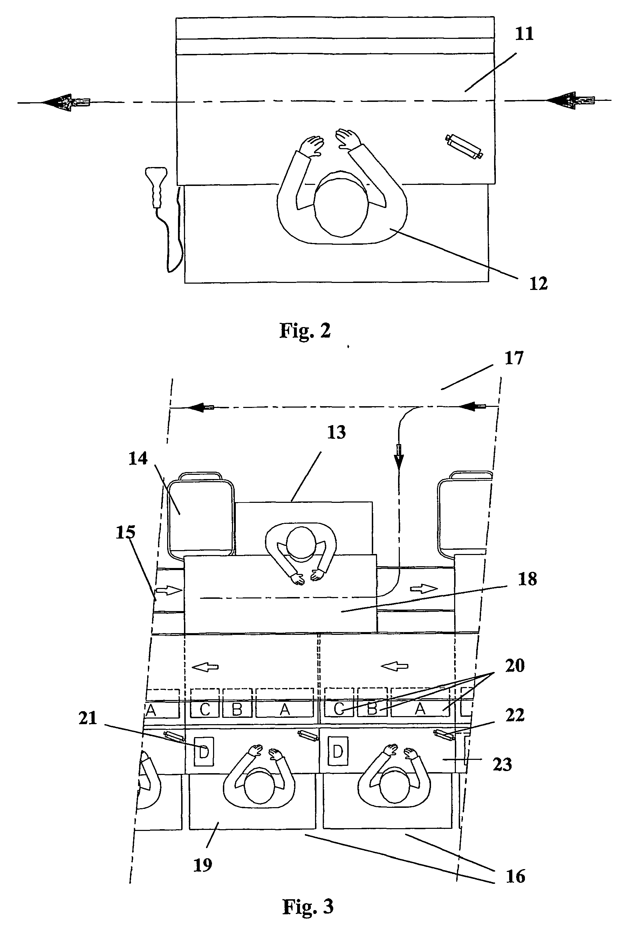

Fig. 2 shows an example of a pre-saw station. The pre-saw station is a critical part of the system since all quarters entering the trimming line have to be processed here, registered to the system and assigned to a specific slicing station. The procedure for this first phase could be as follows:
Quarters enter the pre-saw station from the marshalling area. The operator performs the necessary work. When the work is performed the operator decides which slicing station will receive the quarter. The operator uses a tag reader (e.g. a R.F reader or a barcode reader) to read the origination identification, and the product is moved directly to a specific boning station. The assignment of the meat to a specific boning station is done e.g. by means of an information terminal or by means of a simple button system with a push button for each station in the processing facility or automatically by examining the amount of material already available at each boning station.

Fig. 3 shows a boning station. The boning station consists of a boning table, platform, a bin for heel, conveyor for bone-in-loin (bones with meat) and two slicing stations. Optionally the boning station may have an information terminal described later. Quarters are brought to the boning station or to the slicing station from the pre-saw station. The boner de-bones the quarter and the cuts are distributed among the slicers according to a specified arrangement. Next quarter is processed and all cuts from the quarter are transferred to the other slicer. By means of this procedure it is easy to trace the meat back through the processing and to find out from which quarter or from which animal or farm a piece of meat originates.

The bones are moved to a bone container and only the amount is measured in order to calculate measures indicating the quality of the meat e.g. for paying the farmers according to the weight and/ or quality.

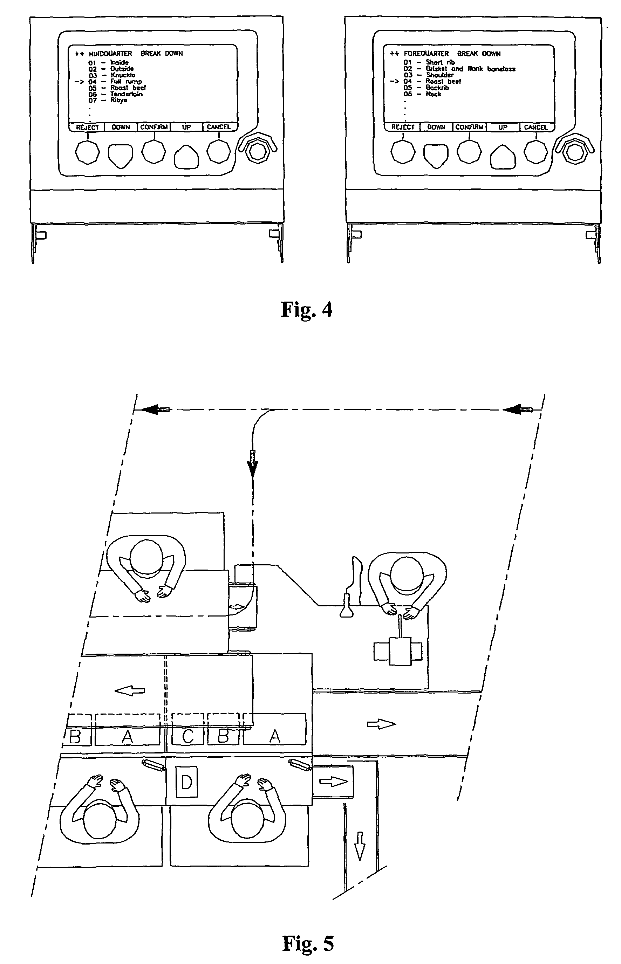

Fig. 4 shows a slicing station. The Slicing station consists of slicing table, platform, 3 product buffers and one fat buffer and optionally an information terminal. The meat from the boner lands on a product buffer on top of the slicing station.

One or more preferred ways of cutting is determined by the system. This is done automatically based on rules. The rules could be based on the weight of the full body, the fat percentage etc. Preferably the system determines a few ways of cutting the meat which may be selected from a selection menu. Based on the selection the terminal shows a picture of how the piece is to be cut into smaller pieces. The slicer typically has four bins. One is for trim type A, one is for trim type B, one is for fat and one for primal cut. The primal and the trim type A and trim type B will be forwarded on a conveyor belt while the fat is thrown into a container for fat. The weight of the fat may - like the weight of the bones - be registered in order to trace the quality of the meat and in order to pay the farmers according to the quality of the meat.

For one specific product, e.g. a sirloin, the system knows e.g. a product ID, the type of cut, the type of animal, slicer ID, boner ID, time of processing, weight and QA-grade (Quality Assurance grade).

The slicer pulls the product from the product buffer to the slicing table and separates it into the different products (Primal cut, trim A, trim B, and fat). Buffers C and B are used for trim A and B and they are emptied on specific time intervals. Fat is inserted in buffer D and is released onto the fat conveyor on predetermined time-interval. Buffer A is used for primal products and each individual piece is traceable to originator. The operator creates the primal cut and places it into the buffer. When the primal cut is ready in the buffer the operator makes a confirmation to the system on a terminal or via a button system. The confirmation includes what type of product is to be released to the primal belt and fed to the dynamic scale. The system knows what quarter is being processed and therefore delivers the ID and other data to the central database.

At the scale 7 the information record is extended with the weight of the product.

The system can be further equipped with a QA station where the meat can be removed from the belt and can re-enter the belt without losing the information record of the meat. The QA station may add information to the information record, e.g. information related to the quality of the meat (fat percentage etc.) or information related to the performance of the workers (how the meat has been sliced etc.). The QA station takes samples from the belt adaptively. I case a worker performs badly, the QA station will take more samples of meat that has been processed by that worker.

The pieces are typically sorted based on their weight and type before they are packed and finally labelled.

All the persons working in the meat processing facility could have a RF tag or similar tag that can be automatically read by a machine. When a person is working e.g. at a slicing station, the station can recognise the person by reading the ID-tag and thus the system can relate information about the worker to the meat being processed or relate information about the meat to an information file of the worker. The information record for the meat may be extended with information about the workers who have been processing the meat. Based on the information record statistics can be performed not only for the meat but also for the workers such as how many pieces of meat the worker is processing in a time period, the quality of the meat processed by a worker etc.

The system may furthermore be connected to a system for paying for the meat and for paying the workers.

Fig. 4 shows an example of a screen of an information terminal with a communication interface to an operator of a processing station. There are two different ways to indicate what primal is coming from the individual slicing stations, mainly a computer terminal or a button system.

A computer terminal is preferred due to an increased flexibility and by means of a computer screen it is possible to provide better guidance to the operator, e.g. by means of pictures showing different cuts. The terminal may provide pictures, text or drawings, such as drawings showing a hindquarter and a forequarter. The name of the product being processed is shown on the screen with a set of instructions matching the product, such as descriptions and/or drawings showing the operator how to cut the meat. Normally the slicer will cut the quarter in the same sequence and therefore the terminal may be given a default set up, including the processing sequence. E.g. a product list of cuts to be made in the sequence that a slicer prefers. In such a product list a pointer could point at the primal cut being processed and the terminal could indicate where each of the products in the list should be placed, e.g. in which product buffer.

Once a primal cut has been processed and a confirmation indicating that the product has been placed e.g. in product buffer A has been given via a conformation button on the terminal - the product line in the product list will be greyed out or disappear on the screen.

By means of this function it may be indicated that the slicing table should be emptied and that all products from the specific quarter have been processed. Furthermore it is an indication to the operator that next quarter, e.g. a quarter with another origination ID can be processed.

The computer terminals may be adapted for the individual workers. E.g. when a worker enters a station, the station determines the ID of the worker by means of an R.F tag. The system knows if the worker is skilled or un-skilled. Accordingly the amount of information and support being given to the worker by means of the computer terminal is adapted to the knowledge of the worker.

The terminals of the systems are connected to a computer system comprising a database system. The computer system handles all information related to the meat and the position of the meat. The computer system furthermore controls the conveyor system such as the servos, the ports redirecting the meat between different transportation belts etc. The computer system could be a regular PC (personal computer) running windows based software, or it could be a mainframe system or any similar system for information handling and machine control. Preferably the system consists of a number of interlocking modules, each module directly relating to a specific part of the production cycle, from quality control, grading and packing to trimming and time management. The modular architecture ensures that faults are easily detected and corrected without having to shut down the entire system. As all modules share a common core, the systems can be run either separately or as part of a full system. One major advantage is that the workers of the facility all share "up to the minute" information which can be used not only to control the equipment but also to support decisions on how to process a piece of meat, how to manage the facility e.g. how to employ new workers, when to have meat delivered and when to have meat shipped. From the database where all the information is stored, reports can be generated. Some reports are pre-specified and are available for the workers by simply pushing a button and selected workers, e.g. protected by a password can request other reports. A graphical user interface layer is adapted to present the information in a "user-friendly" way such as by means of drawings, graphs etc.

Fig. 5 shows two slicing stations, de-boning station and area for bone in loin.

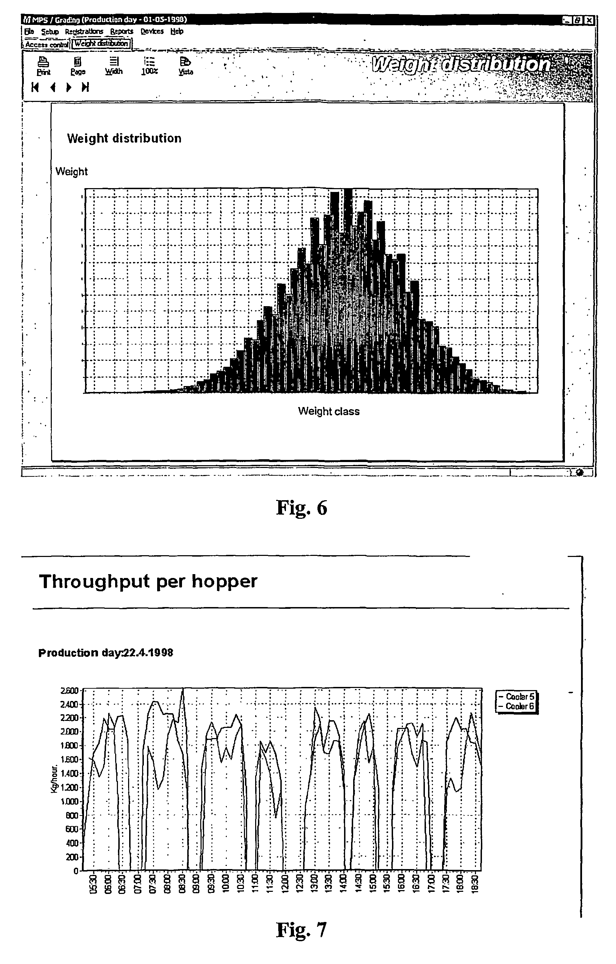

Figs. 6-9 shows examples of reports presented by means of respectively graphical and textual interfaces.

Fig.6 shows an interface for monitoring the entire production process by means of a weight distribution graph.

Fig. 7 shows an interface for monitoring the throughput e.g. for each hopper or bin, or for each worker.

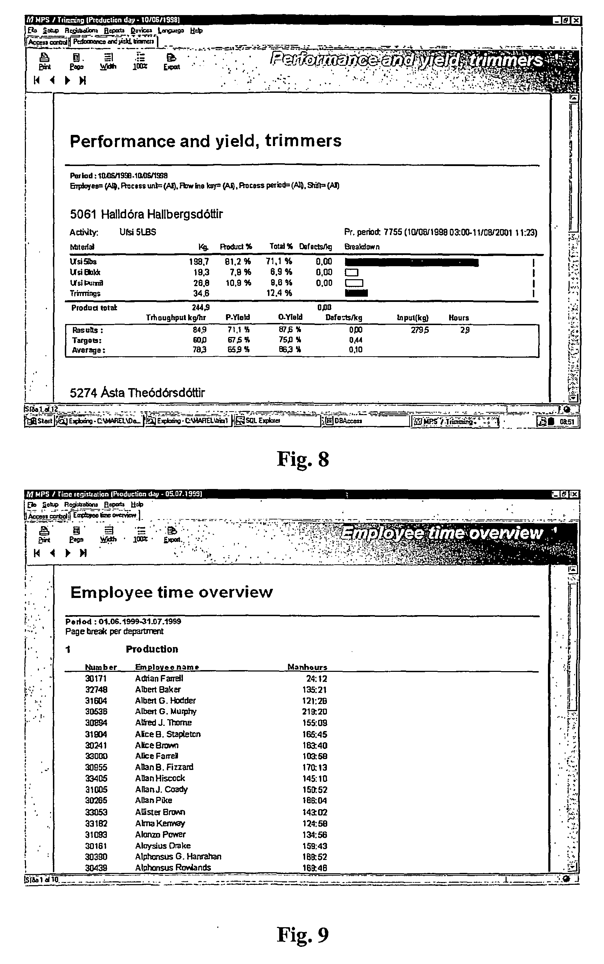

Fig. 8 shows in real-time the yield and output for each trimmer (worker performing trims) in the processing line. The monitoring enables performance targets to be set for each of the workers.

Fig. 9 shows a report for time management providing a range of personnel data and job tracing.

The description and drawings are only representative as an example of a preferred embodiment of the present invention and various implementations may be considered.

## Claims

1. An integrated meat processing and information handling method for processing a meat product, said method comprising the steps of:
- receiving a meat product at a receiving area,
- obtaining information related to said meat product and storing the information in a computer system,
- selecting at least one cutting rule for said meat product based on said information, wherein said at least one cutting rule is used for guiding in processing said meat product,
- selecting at least one processing station to process said meat product,
- providing said at least one processing station with said at least one cutting rule,
- transferring said meat product to said at least one processing station, while tracing its position,
- processing said meat product in terms of said at least one cutting rule into smaller meat products,
- transferring said smaller meat products to a packing area, while tracing their position,
wherein at the packing area each of said smaller meat products is provided with at least one information related to the initial meat product.

2. A method according to claim 1, wherein selecting at least one cutting station is performed by an operator.

3. A method according to claim 1 or 2, wherein the processing is divided into following areas:
- a de-bone area, where said meat product is de-boned,
- a slicing area, where said de-boned meat product is cut into smaller meat products, and
- a packing area for packing and labelling said smaller meat products,
wherein said smaller meat products are provided with at least one information related to the initial meat product.

4. A method according to any of the preceding claims, wherein the information related to the product comprises at least one of the following information:
- identification number pointing to the origination of it,
- the weight,
- the fat percentage,
- the type, and
- veterinarian inspection.

5. A method according to any of the preceding claims, wherein the meat product is weighed and the result stored in a computer system before entering said at least one processing station.

6. A method according to any of the preceding claims, further comprising the steps of:
- cutting the meat product into at least two pieces, and
- storing in the computer system information related to said at least two pieces.

7. A method according to any of the preceding claims, wherein processing said meat product in terms of said at least one cutting rule comprises cutting the meat product into smaller meat products.

8. A method according to any of the preceding claims, wherein a worker is provided with a graphical presentation of instructions of how to cut the meat product.

9. A method according to any of the preceding claims, wherein the graphical presentation is a graphical picture showing how to cut the meat product with the name of the meat product being processed and a set of instructions matching the meat product.

10. A method according to any of the preceding claims, wherein the smaller meat product is at least one of the following group:
- fat,
- bones,
- trimmings,
- T-bones,
- sirloin, and
- primary products.

11. A method according to any of the preceding claims, wherein information related to the processing is stored in the computer system.

12. A method according to any of the preceding claims, wherein the information related to the processing is the quality of the processing.

13. A method according to any of the preceding claims, wherein the information related to the processing is the duration of the processing.

14. A method according to any of the preceding claims, wherein the information related to the processing is the time of the processing.

15. A method according to any of the preceding claims, wherein the information related to the processing is the yield of the processing.

16. A method according to any of the preceding claims, wherein the information related to the processing is the information related to a worker involved in the processing.

17. A method according to any of the preceding claims, wherein the information related to the processing is the performance of the worker.

18. A method according to any of the preceding claims, wherein the performance of the worker is compared with a reference measure stored in the computer system and wherein a log file comprising the comparison is stored in the computer system.

19. A method according to any of the preceding claims, wherein said smaller meat products are placed in one or more buffers.

20. A method according to any of the preceding claims, wherein the number of buffers is four, where one buffer is adapted to store primal products, one buffer is adapted to store fat and two buffers are adapted to store trim.

21. A method according to any of the preceding claims, wherein at least one of said buffers is released on predetermined time-interval.

22. A method according to any of the preceding claims, wherein once the primal product is ready in the buffer the operator makes a confirmation to the system.

23. A method according to any of the preceding claims, wherein the confirmation includes what type of smaller meat product is to be released.

24. A method according to any of the preceding claims, wherein the confirmation includes that all meat products have been processed.

25. A method according to any of the preceding claims, wherein the released smaller meat products are weighed and the result stored in the computer system.

26. A method according to any of the preceding claims, wherein the tracing comprises the steps of:
- registering in the computer system information related to a position of a meat product,
- forwarding the meat product to a processing station,
- registering in the computer system information related to a sequence of meat products entering the processing station and smaller meat products leaving the processing station, and
- processing the information so as to determine the position of the meat product or the smaller meat products.

27. A method according to any of the preceding claims, wherein once a worker enters a processing station, the station determines the identification (ID) of the worker by means of an Radio Frequency tag (RF-tag).

28. A method according to any of the preceding claims, wherein based on said identification of the worker the processing station determines if the worker is skilled or un-skilled.

29. A method according to any of the preceding claims, further comprising a quality control station (QA station) where the quality of the meat product and the processing of the meat product is examined, and wherein the meat product can be removed from the belt and can re-enter the belt without losing the information record of the meat product.

30. A method according to any of the preceding claims, wherein quality control station (QA station) may add information to the information record such as information related to the quality of the meat product or information related to the performance of the workers.

31. A method according to any of the preceding claims, wherein the quality control station (QA station) takes more samples of meat product from a worker that has been careless in processing the meat products.

32. An integrated meat processing and information handling system for processing a meat product, said system comprising:
- receiving area for receiving said meat products,
- means for obtaining information related to said meat product,
- a storage means for electronically storing said information,
- a computing means for processing the stored information,
- means for utilizing the stored information for selecting at least one cutting rule for guiding in processing said meat product,
- at least one processing station for processing the meat product in terms of said at least one cutting rule,
- communication means for communicating to the processing stations and the computing means, and
- means for providing cutting rules to said processing station,
- a transporting means for transporting said meat product between at least one processing station,
- a tracing means for tracing a position of said meat product,
- means for processing the meat according to said cutting rules into smaller meat products,
- means for transferring said processed meat product while tracing their position to a packing area,
wherein said processed meat product is packed and labelled with at least one information related to the initial meat product.

33. A system according to claim 32, wherein the computing means is computer system connected to at least one processing station.

34. A system according to claim 32 or 33, wherein the computer system handles information related to the meat product and the position of the meat product and the conveyor system.

35. A system according to any of the claims 32-34, further comprising an information terminal at the processing station for providing an operator with information relating to the processing of the meat product.

36. A system according to any of the claims 32-35, wherein said information terminal is a computer terminal.

37. A system according to any of the claims 32-36, wherein the terminal is controlled by the computer system.

38. A system according to any of the claims 32-37, wherein the transporting means is a conveyor belt.

39. A system according to any of the claims 32-38, wherein the tracing means is based on arranging a plurality of sensors in a number of places along the conveyor belt.

40. A system according to any of the claims 32-39, wherein the tracing means is based keeping track on index pulses in the conveyor system.

41. A system according to any of the claims 32-40, further comprising a weighing means for weighing the meat product or the smaller meat products.

42. A system according to any of the claims 32-41, further comprising a weighing means for weighing the smaller meat products.

43. A system according to any of the claims 32-42, wherein the weighing means is a dynamic scale and/or a static scale.

44. A system according to any of the claims 32-43, further comprising a packing station for packing and labelling packed smaller meat products.

45. A system according to any of the claims 32-44, wherein the processing station comprises:
- at least one de-bone station, where said meat product is de-boned,
- at least one slicing station, where said de-boned meat product is processed into smaller meat products, and
- at least one packing station for packing and labelling said smaller meat products.

46. A system according to any of the claims 32-45, wherein at least one of the processing station is adapted to read an identification information from an operator.

## Patentansprüche

1. Integriertes Verfahren zur Fleischverarbeitung und Informationsbearbeitung zur Verarbeitung eines Fleischprodukts, wobei das Verfahren die folgenden Schritte umfasst:
- Aufnehmen eines Fleischprodukts an einem Aufnahmebereich,
- Erhalten von das Fleischprodukt betreffenden Informationen und Speichern der Informationen in einem Computersystem,
- Auswählen mindestens eine Schneiderichtlinie für das Fleischprodukt auf der Basis der Informationen, wobei die mindestens eine Schneiderichtlinie zum Leiten der Verarbeitung des Fleischprodukts verwendet wird,
- Auswählen mindestens einer Verarbeitungsstation zum Verarbeiten des Fleischprodukts,
- Versehen der mindestens einen Verarbeitungsstation mit der mindestens einen Schneiderichtlinie,
- Überführen des Fleischprodukts zur mindestens einen Verarbeitungsstation, während dessen Position verfolgt wird,
- Verarbeiten des Fleischprodukts im Hinblick auf die mindestens eine Schneiderichtlinie in kleinere Fleischprodukte,
- Überführen der kleineren Fleischprodukte zu einem Verpackungsbereich, während deren Position verfolgt wird,
wobei am Verpackungsbereich jedes der kleineren Fleischprodukte mit mindestens einer das anfängliche Fleischprodukt betreffenden Information versehen wird.

2. Verfahren nach Anspruch 1, wobei die Auswahl mindestens einer Schneidestation durch einen Bediener durchgeführt wird.

3. Verfahren nach Anspruch 1 oder 2, wobei die Verarbeitung in folgende Bereiche aufgeteilt ist:
- einen Entbeinbereich, in welchem das Fleischprodukt entbeint wird,
- einen Zerteilungsbereich, in welchem das entbeinte Fleischprodukt in kleinere Fleischprodukte geschnitten wird, und
- einen Verpackungsbereich zum Verpacken und Kennzeichnen der kleineren Fleischprodukte, wobei die kleineren Fleischprodukte mit mindestens einer das anfängliche Fleischprodukt betreffenden Information versehen werden.

4. Verfahren nach einem der vorangehenden Ansprüche, wobei die das Produkt betreffenden Informationen mindestens eine der folgenden Informationen umfassen:
- Identifikationsnummer, die auf deren Ursprung hindeutet,
- das Gewicht,
- den Fettprozentanteil,
- den Typ und
- tierärztliche Kontrolle.

5. Verfahren nach einem der vorangehenden Ansprüche, wobei das Fleischprodukt vor dem Eintreten in die mindestens eine Verarbeitungsstation gewogen und das Ergebnis in einem Computersystem gespeichert wird.

6. Verfahren nach einem der vorangehenden Ansprüche, des Weiteren umfassend die Schritte:
- Schneiden des Fleischprodukts in mindestens zwei Stücke und
- Speichern von die mindestens zwei Stücke betreffenden Informationen im Computersystem.

7. Verfahren nach einem der vorangehenden Ansprüche, wobei die Verarbeitung des Fleischprodukts im Hinblick auf die mindestens eine Schneiderichtlinie das Schneiden des Fleischprodukts in kleinere Fleischprodukte umfasst.

8. Verfahren nach einem der vorangehenden Ansprüche, wobei dem Arbeiter eine graphische Darstellung von Anleitungen darüber, wie das Fleischprodukt zu schneiden ist, zur Verfügung gestellt wird.

9. Verfahren nach einem der vorangehenden Ansprüche, wobei die graphische Darstellung ein graphisches Bild ist, das zeigt wie das Fleischprodukt mit dem Namen des zu verarbeitenden Fleischprodukts und einem Satz an zum Fleischprodukt passenden Anweisungen zu schneiden ist.

10. Verfahren nach einem der vorangehenden Ansprüche, wobei das kleinere Fleischprodukt mindestens eines der folgenden Gruppe ist:
- Fett,
- Knochen,
- Randabschnittstreifen,
- T-Knochen,
- Filet und
- Hauptprodukte.

11. Verfahren nach einem der vorangehenden Ansprüche, wobei die die Verarbeitung betreffenden Informationen im Computersystem gespeichert werden.

12. Verfahren nach einem der vorangehenden Ansprüche, wobei es sich bei den die Verarbeitung betreffenden Informationen um die Qualität des Verfahrens handelt.

13. Verfahren nach einem der vorangehenden Ansprüche, wobei es sich bei den die Verarbeitung betreffenden Informationen um die Dauer der Verarbeitung handelt.

14. Verfahren nach einem der vorangehenden Ansprüche, wobei es sich bei den die Verarbeitung betreffenden Informationen um den Zeitpunkt der Verarbeitung handelt.

15. Verfahren nach einem der vorangehenden Ansprüche, wobei es sich bei den die Verarbeitung betreffenden Informationen um die Ertrag der Verarbeitung handelt.

16. Verfahren nach einem der vorangehenden Ansprüche, wobei es sich bei den die Verarbeitung betreffenden Informationen um die Informationen handelt, die einen in die Verarbeitung einbezogenen Arbeiter betreffen.

17. Verfahren nach einem der vorangehenden Ansprüche, wobei es sich bei den die Verarbeitung betreffenden Informationen um die Leistung des Arbeiters handelt.

18. Verfahren nach einem der vorangehenden Ansprüche, wobei die Leistung des Arbeiters mit einem im Computersystem gespeicherten Bezugsmaß verglichen und eine den Vergleich umfassende Logdatei im Computersystem gespeichert wird.

19. Verfahren nach einem der vorangehenden Ansprüche, wobei die kleineren Fleischprodukte in einem oder mehreren Puffer(n) platziert werden.

20. Verfahren nach einem der vorangehenden Ansprüche, wobei die Anzahl an Puffern vier beträgt, wobei ein Puffer zum Lagern von ursprünglichen Produkten geeignet ist, ein Puffer zum Lagern von Fett geeignet ist und zwei Puffer zum Lagern von Randabschnittstreifen geeignet sind.

21. Verfahren nach einem der vorangehenden Ansprüche, wobei mindestens einer der Puffer in einem vorbestimmten Zeitintervall freigegeben wird.

22. Verfahren nach einem der vorangehenden Ansprüche, wobei der Bediener dem System den Zeitpunkt bestätigt, wenn das ursprüngliche Produkt im Puffer bereit ist.

23. Verfahren nach einem der vorangehenden Ansprüche, wobei die Bestätigung einschließt, welcher Typ an kleinerem Fleischprodukt freigegeben wird.

24. Verfahren nach einem der vorangehenden Ansprüche, wobei die Bestätigung einschließt, dass alle Fleischprodukte bearbeitet wurden.

25. Verfahren nach einem der vorangehenden Ansprüche, wobei die freigegebenen kleineren Fleischprodukte gewogen werden und das Ergebnis im Computersystem gespeichert wird.

26. Verfahren nach einem der vorangehenden Ansprüche, wobei die Verfolgung die folgenden Schritte umfasst:
- Registrieren von Informationen im Computersystem, die eine Position eines Fleischprodukts betreffen,
- Vorwärtsbefördern des Fleischprodukts zu einer Verarbeitungsstation,
- Registrieren von Informationen im Computersystem, die eine Sequenz von Fleischprodukten, die in die Verarbeitungsstation eintreten, und kleineren Fleischprodukten, die die Verarbeitungsstation verlassen, betreffen, und
- Verarbeiten der Informationen, um die Position des Fleischprodukts oder der kleineren Fleischprodukte zu bestimmen.

27. Verfahren nach einem der vorangehenden Ansprüche, wobei die Station die Identifizierung (ID) eines Arbeiters durch eine Radiofrequenz-Tag (RF-tag) bestimmt, sobald der Arbeiter eine Verarbeitungsstation betritt.

28. Verfahren nach einem der vorangehenden Ansprüche, wobei die Verarbeitungsstation auf der Basis der Identifizierung des Arbeiters bestimmt, ob es sich bei dem Arbeiter um einen Fachmann handelt oder nicht.

29. Verfahren nach einem der vorangehenden Ansprüche, des Weiteren umfassend eine Qualitätskontrollstation (QA-Station), in welcher die Qualität des Fleischprodukts und die Verarbeitung des Fleischprodukts geprüft werden und wobei das Fleischprodukt vom Band entfernt werden kann und das Band erneut betreten kann, ohne die Informationsaufzeichnung des Fleischprodukts zu verlieren.

30. Verfahren nach einem der vorangehenden Ansprüche, wobei die Qualitätskontrollstation (QA-Station) Informationen zu den aufgezeichneten Informationen, wie Informationen, die die Qualität des Fleischprodukts betreffen, oder Informationen, die die Leistung des Arbeiters, betreffen, zufügen kann.

31. Verfahren nach einem der vorangehenden Ansprüche, wobei die Qualitätskontrollstation (QA-Station) mehr Proben des Fleischprodukts von einem Arbeiter entnimmt, der beim Verarbeiten der Fleischprodukte nachlässig war.

32. Integriertes System zur Fleischverarbeitung und Informationsbearbeitung zum Verarbeiten eines Fleischprodukts, wobei das System Folgendes umfasst:
- Aufnahmebereich zum Aufnehmen der Fleischprodukte,
- Mittel zum Erhalt von Informationen, die das Fleischprodukt betreffen,
- ein Speichermittel zum elektronischen Speichern der Informationen,
- ein Berechnungsmittel zum Verarbeiten der gespeicherten Informationen,
- ein Mittel zur Verwendung der gespeicherten Informationen zum Auswählen von mindestens einer Schneiderichtlinie zum Leiten der Verarbeitung des Fleischprodukts,
- mindestens eine Verarbeitungsstation zum Verarbeiten des Fleischprodukts im Hinblick auf die mindestens eine Schneiderichtlinie,
- Kommunikationsmittel zum kommunizieren mit den Verarbeitungsstationen und dem Berechnungsmittel, und
- Mittel zum Bereitstellen von Schneiderichtlinien für die Verarbeitungsstation,
- ein Beförderungsmittel zum Befördern des Fleischprodukts zwischen mindestens einer Verarbeitungsstation,
- ein Verfolgungsmittel zum Verfolgen einer Position des Fleischprodukts,
- Mittel zum Verarbeiten des Fleisches gemäß den Schneiderichtlinien in kleinere Fleischprodukte,
- Mittel zum Übertragen des verarbeiteten Fleischprodukts unter Verfolgung ihrer Position zu einem Verpackungsbereich,
wobei das verarbeitete Fleischprodukt verpackt und mit mindestens einer das ursprüngliche Fleischprodukt betreffenden Information beschriftet wird.

33. System nach Anspruch 32, wobei das Berechnungsmittel ein mit mindestens einer Verarbeitungsstation verbundenes Computersystem ist.

34. System nach Anspruch 32 oder 33, wobei das Computersystem Informationen, die das Fleischprodukt und die Position des Fleischprodukts und das Beförderungssystem betreffen, bearbeitet.

35. System nach einem der Ansprüche 32-34, des Weiteren umfassend ein Informationsterminal an der Verarbeitungsstation, um einem Bediener Informationen zur Verfügung zu stellen, die die Verarbeitung des Fleischprodukts betreffen.

36. System nach einem der Ansprüche 32-35, wobei das Informationsterminal ein Computerterminal ist.

37. System nach einem der Ansprüche 32-36, wobei das Terminal durch das Computersystem gesteuert wird.

38. System nach einem der Ansprüche 32-37, wobei das Beförderungsmittel ein Förderband ist.

39. System nach einem der Ansprüche 32-38, wobei das Verfolgungsmittel auf dem Anordnen mehrerer Sensoren in einer Anzahl an Stellen entlang des Förderbands basiert.

40. System nach einem der Ansprüche 32-39, wobei das Verfolgungsmittel auf dem Spurhalten von Indeximpulsen im Beförderungssystem basiert.

41. System nach einem der Ansprüche 32-40, des Weiteren umfassend ein Wiegemittel zum Wiegen des Fleischprodukts oder der kleineren Fleischprodukte.

42. System nach einem der Ansprüche 32-41, des Weiteren umfassend ein Wiegemittel zum Wiegen der kleineren Fleischprodukte.

43. System nach einem der Ansprüche 32-42, wobei das Wiegemittel eine dynamische Skala und/oder eine statische Skala ist.

44. System nach einem der Ansprüche 32-43, des Weiteren umfassend eine Verpackungsstation zum Verpacken und Beschriften von verpackten kleineren Fleischprodukten.

45. System nach einem der Ansprüche 32-44, wobei die Verarbeitungsstation umfasst:
- mindestens eine Entbeinstation, in welcher das Fleischprodukt entbeint wird,
- mindestens eine Zerteilungsstation, in welcher das entbeinte Fleischprodukt zu kleineren Fleischprodukten verarbeitet wird, und
- mindestens eine Verpackungsstation zum Verpacken und Kennzeichnen der kleineren Fleischprodukte.

46. System nach einem der Ansprüche 32-45, wobei mindestens eine der Verarbeitungsstationen zum Lesen einer Identifikationsinformation von einem Bediener geeignet ist.

## Revendications

1. Procédé intégré de traitement de viande et de gestion d'informations pour le traitement un produit carné, ledit procédé comprenant les étapes consistant à :
- recevoir un produit carné au niveau d'une zone de réception,
- obtenir des informations concernant ledit produit carné et mémoriser les informations dans un système informatique,
- sélectionner au moins une règle de découpe pour ledit produit carné en fonction desdites informations, dans lequel ladite au moins une règle de découpe est utilisée pour guider le traitement dudit produit carné,
- sélectionner au moins un poste de traitement pour traiter ledit produit carné,
- pourvoir ledit au moins un poste de traitement avec ladite au moins une règle de découpe,
- transférer ledit produit carné au dit au moins un poste de traitement, tout en suivant sa position,
- traiter ledit produit carné en termes de ladite au moins une règle de découpe en produits carnés plus petits,
- transférer lesdits produits carnés plus petits vers une zone d'emballage, tout en suivant leur position,
dans lequel au niveau de la zone d' emballage, chacun desdits produits carnés plus petits est pourvu d'au moins une information concernant le produit carné initial.

2. Procédé selon la revendication 1, dans lequel la sélection d'au moins un poste de découpe est réalisée par un opérateur.

3. Procédé selon la revendication 1 ou la revendication 2, dans lequel le traitement est divisé en les zones suivantes :
- une zone de désossage, où ledit produit carné est désossé,
- une zone de tranchage, où ledit produit carné désossé est découpé en produits carnés plus petits, et
- une zone d'emballage pour emballer et étiqueter lesdits produits carnés plus petits,
dans lequel lesdits produits carnés plus petits sont pourvus d'au moins une information concernant le produit carné initial.

4. Procédé selon l'une quelconque des revendications précédentes, dans lequel l'information liée au produit comprend au moins une des informations suivantes :
- numéro d'identification indiquant son origine,
- le poids,
- le pourcentage de matière grasse,
- le type, et
- l'inspection vétérinaire.

5. Procédé selon l'une quelconque des revendications précédentes, dans lequel le produit carné est pesé et le résultat est mémorisé dans un système informatique avant d'entrer dans ledit au moins un poste de traitement.

6. Procédé selon l'une quelconque des revendications précédentes, comprenant en outre les étapes consistant à :
- découper le produit carné en au moins deux morceaux, et
- mémoriser dans le système informatique des informations concernant lesdits au moins deux morceaux.

7. Procédé selon l'une quelconque des revendications précédentes, dans lequel le traitement dudit produit carné en termes de ladite au moins une règle de découpe comprend la découpe du produit carné en produits carnés plus petits.

8. Procédé selon l'une quelconque des revendications précédentes, dans lequel un travailleur reçoit une présentation graphique des instructions sur la manière de découper le produit carné.

9. Procédé selon l'une quelconque des revendications précédentes, dans lequel la présentation graphique est une image graphique illustrant comment découper le produit carné avec le nom du produit carné étant traité et un ensemble d'instructions correspondant au produit carné.

10. Procédé selon l'une quelconque des revendications précédentes, dans lequel le produit carné le plus petit est au moins un parmi le groupe suivant :
- matière grasse,
- os,
- parures,
- aloyaux,
- surlonges, et
- produits primaires.

11. Procédé selon l'une quelconque des revendications précédentes, dans lequel les informations concernant le traitement sont mémorisées dans le système informatique.

12. Procédé selon l'une quelconque des revendications précédentes, dans lequel les informations concernant le traitement sont la qualité du traitement.

13. Procédé selon l'une quelconque des revendications précédentes, dans lequel les informations concernant le traitement sont la durée du traitement.

14. Procédé selon l'une quelconque des revendications précédentes, dans lequel les informations concernant le traitement sont le temps de traitement.

15. Procédé selon l'une quelconque des revendications précédentes, dans lequel les informations concernant le traitement sont le rendement du traitement.

16. Procédé selon l'une quelconque des revendications précédentes, dans lequel les informations concernant le traitement sont les informations concernant un travailleur impliqué dans le traitement.

17. Procédé selon l'une quelconque des revendications précédentes, dans lequel les informations concernant le traitement sont la performance du travailleur.

18. Procédé selon l'une quelconque des revendications précédentes, dans lequel la performance du travailleur est comparée à une mesure de référence mémorisée dans le système informatique et dans lequel un fichier journal comprenant la comparaison est mémorisé dans le système informatique.

19. Procédé selon l'une quelconque des revendications précédentes, dans lequel lesdits produits carnés plus petits sont placés dans un ou plusieurs tampons.

20. Procédé selon l'une quelconque des revendications précédentes, dans lequel le nombre de tampons est de quatre, où un tampon est adapté pour stocker des produits primaires, un tampon est adapté pour stocker de la matière grasse et deux tampons sont adaptés pour stocker les parures.

21. Procédé selon l'une quelconque des revendications précédentes, dans lequel au moins un desdits tampons est libéré à un intervalle de temps prédéterminé.

22. Procédé selon l'une quelconque des revendications précédentes, dans lequel une fois que le produit primaire est prêt dans le tampon, l'opérateur effectue une confirmation au système.

23. Procédé selon l'une quelconque des revendications précédentes, dans lequel la confirmation comprend quel type de produit carné plus petit doit être libéré.

24. Procédé selon l'une quelconque des revendications précédentes, dans lequel la confirmation comprend que tous les produits carnés ont été traités.

25. Procédé selon l'une quelconque des revendications précédentes, dans lequel les produits carnés plus petits libérés sont pesés et le résultat mémorisé dans le système informatique.

26. Procédé selon l'une quelconque des revendications précédentes, dans lequel le suivi comprend les étapes consistant à :
- enregistrer dans le système informatique des informations concernant une position d'un produit carné,
- faire avancer le produit carné vers un poste de traitement,
- enregistrer dans le système informatique des informations liées à une séquence de produits carnés entrant le poste de traitement et des produits carnés plus petits quittant le poste de traitement, et
- traiter les informations de manière à déterminer la position du produit carné ou de produits carnés similaires.

27. Procédé selon l'une quelconque des revendications précédentes, dans lequel une fois qu'un travailleur entre un poste de traitement, le poste détermine l'identité (ID) du travailleur au moyen d'une balise radiofréquence (balise RF).

28. Procédé selon l'une quelconque des revendications précédentes, dans lequel en fonction de ladite identité du travailleur, le poste de traitement détermine si le travailleur est qualifié ou non qualifié.

29. Procédé selon l'une quelconque des revendications précédentes, comprenant en outre un poste de contrôle qualité (poste QC) où la qualité du produit carné et le traitement du produit carné sont examinés, et dans lequel le produit carné peut être retiré d'un tapis et peut entrer à nouveau le tapis sans perdre les informations enregistrées du produit carné.

30. Procédé selon l'une quelconque des revendications précédentes, dans lequel le poste de contrôle qualité (poste QC) peut ajouter des informations aux informations enregistrées telles que des informations concernant la qualité du produit carné ou des informations concernant la performance des travailleurs.

31. Procédé selon l'une quelconque des revendications précédentes, dans lequel le poste de contrôle qualité (poste QC) prend plus d'échantillons de produit carné d'un travailleur qui a été négligeant dans le traitement de produits carnés.

32. Système intégré de traitement de viande et de gestion d'informations pour le traitement d'un produit carné, ledit système comprenant :
- une zone de réception pour recevoir lesdits produits carnés,
- des moyens d'obtention d'informations concernant ledit produit carné,
- un moyen de mémorisation pour mémoriser électroniquement lesdites informations,
- un moyen informatique pour traiter les informations mémorisées,
- des moyens d'utilisation des informations mémorisées pour sélectionner au moins une règle de découpe pour guider au traitement dudit produit carné,
- au moins un poste de traitement pour traiter le produit carné en termes de ladite au moins une règle de découpe,
- des moyens de communication pour communiquer aux postes de traitement et aux moyens informatiques, et
- des moyens de pourvoir des règles de découpe au dit poste de traitement,
- un moyen de transport pour transporter ledit produit carné entre au moins un poste de traitement,
- un moyen de suivi pour suivre une position dudit produit carné,
- des moyens de traitement de la viande selon lesdites règles de découpe en produits carnés plus petits,
- des moyens de transfert dudit produit carné traité tout en suivant leur position vers une zone d'emballage,
dans lequel ledit produit carné traité est emballé et étiqueté avec au moins une information concernant le produit carné initial.

33. Système selon la revendication 32, dans lequel le moyen informatique est un système informatique connecté à au moins un poste de traitement.

34. Système selon la revendication 32 ou la revendication 33, dans lequel le système informatique gère des informations concernant le produit carné et la position du produit carné du système de transport.

35. Système selon l'une quelconque des revendications 32 à 34, comprenant en outre une borne d'informations au niveau du poste de traitement pour fournir à l'opérateur des informations concernant le traitement du produit carné.

36. Système selon l'une quelconque des revendications 32 à 35, dans lequel ladite borne d'informations est une borne informatique.

37. Système selon l'une quelconque des revendications 32 à 36, dans lequel la borne est contrôlée par le système informatique.

38. Système selon l'une quelconque des revendications 32 à 37, dans lequel le moyen de transport est un tapis transporteur.

39. Système selon l'une quelconque des revendications 32 à 38, dans lequel le moyen de suivi est fondé sur l'agencement d'une pluralité de capteurs dans un nombre d'emplacements le long du tapis transporteur.

40. Système selon l'une quelconque des revendications 32 à 39, dans lequel le moyen de suivi est fondé sur le suivi d'impulsions de curseur dans le système de transport.

41. Système selon l'une quelconque des revendications 32 à 40, comprenant en outre un moyen de pesage pour peser le produit carné ou les produits carnés plus petits.

42. Système selon l'une quelconque des revendications 32 à 41, comprenant en outre un moyen de pesage pour peser les produits carnés plus petits.

43. Système selon l'une quelconque des revendications 32 à 42, dans lequel le moyen de pesage est une balance dynamique et/ou une balance statique.

44. Système selon l'une quelconque des revendications 32 à 43, comprenant en outre un poste d'emballage pour emballer et étiqueter des produits carnés plus petits emballés.

45. Système selon l'une quelconque des revendications 32 à 44, dans lequel le poste de traitement comprend :
- au moins un poste de désossage, où ledit produit carné est désossé,
- au moins un poste de découpage, où ledit produit carné désossé est traité en produits carnés plus petits, et
- au moins un poste d'emballage pour emballer et étiqueter lesdits produits carnés plus petits.

46. Système selon l'une quelconque des revendications 32 à 45, dans lequel au moins un des postes de traitement est adapté pour lire une information d'identité d'un opérateur.
